Europäisches Patentamt

European Patent Office

Office européen des brevets

(19)

(11) Publication number: **0 175 903**

**A1**

(12)

# EUROPEAN PATENT APPLICATION

(21) Application number: **85110156.8**

(22) Date of filing: **13.08.85**

(51) Int. Cl.⁴: **H 02 K 26/00**
**H 02 K 21/24**

(30) Priority: **27.08.84 JP 178901/84**

(43) Date of publication of application:
**02.04.86 Bulletin 86/14**

(84) Designated Contracting States:
**CH DE FR GB IT LI NL SE**

(71) Applicant: **HITACHI, LTD.**
**6, Kanda Surugadai 4-chome Chiyoda-ku**
**Tokyo 100(JP)**

(72) Inventor: **Ejiri, Yuuki**
**Takaba Bouda Apt. 314 2593, Bouda**
**Katsuta-shi Ibaraki-ken(JP)**

(72) Inventor: **Kamifuji, Hiroshi**
**2785-28, Tsuda**
**Katsuta-shi Ibaraki-ken(JP)**

(72) Inventor: **Ito, Tomoo**
**3-20-14, Higashiohshima**
**Katsuta-shi Ibaraki-ken(JP)**

(74) Representative: **Patentanwälte Beetz sen. - Beetz jun.**
**Timpe - Siegfried - Schmitt-Fumian**
**Steinsdorfstrasse 10**
**D-8000 München 22(DE)**

(54) **Torque motor.**

(57) In a torque motor (6; 6a) comprising a rotor (13; 22; 24) having permanent magnets (12), and fixed electromagnets (15), the rotor is shaped in a disk, the permanent magnets (12) are arranged in this disk so that magnetic fields in the axial direction are thereby generated, the fixed electromagnets (15) are constructed so that the magnetic fields thereof are also formed in the axial direction, and a prescribed control voltage (V) is impressed on these fixed electromagnets (15). Such a constitution enables the attainment of a torque motor (6; 6a) of high torque which enables the excellent control of throttle valve even when it has been reluctant to move due to a change with time etc.

*FIG. 1*

S P E C I F I C A T I O N

Title of the Invention          TORQUE MOTOR

Subject of the Invention

The present invention relates to a torque motor.

Background of the Invention

A motor is used for opening and closing an inlet throttle valve of an automobile internal combustion engine, as is disclosed in Japanese Patent Publication No. 25853/1983 and Japanese Patent Laid-Open No. 145867/1980. However, no special consideration has been given to the sluggish response of this throttle valve which is caused by the dust or the like sticking thereto and shown in operation especially when it is switched from the closed state to the opened, that is, when it starts to open. Thus, a large motor is needed when said sluggish response is taken into consideration, which results in unfavorable employment of a large motor. It has been desired, therefore, to develop a motor having a torque facilitating the opening and closing of the throttle valve when it is coupled directly to this valve to open and close same, that is, a torque motor, without making it large.

Object of the Invention

An object of the present invention is to furnish
a torque motor of high torque which enables excellent
control of a throttle valve which is reluctant to
operate sluggishly due to its deterioration with time.

Characteristic Features of the Invention

The present invention is characterized in that,
in a torque motor provided with a rotor having permanent
magnets, a fixed case supporting this rotor, and fixed
electromagnets supported by this fixed case and arranged opposite the permanent magnets of said rotor
with a prescribed gap from these magnets, said rotor
is shaped in a disk, said permanent magnets are arranged in this disk so that they generate magnetic
fields in the axial direction, said fixed electromagnets are constructed so that they also form magnetic
fields in the axial direction, and a prescribed control
voltage is impressed on these fixed electromagnets.
According to this construction, the rotor is shaped
in the disk, and the permanent magnets are arranged
in the disk so that they generate magnetic fields in
the axial direction. Moreover, the fixed electromagnets are constructed so that they also form magnetic
fields in the axial direction, and a prescribed control voltage is impressed on these fixed electromagnets.

Brief Description of Drawings.:

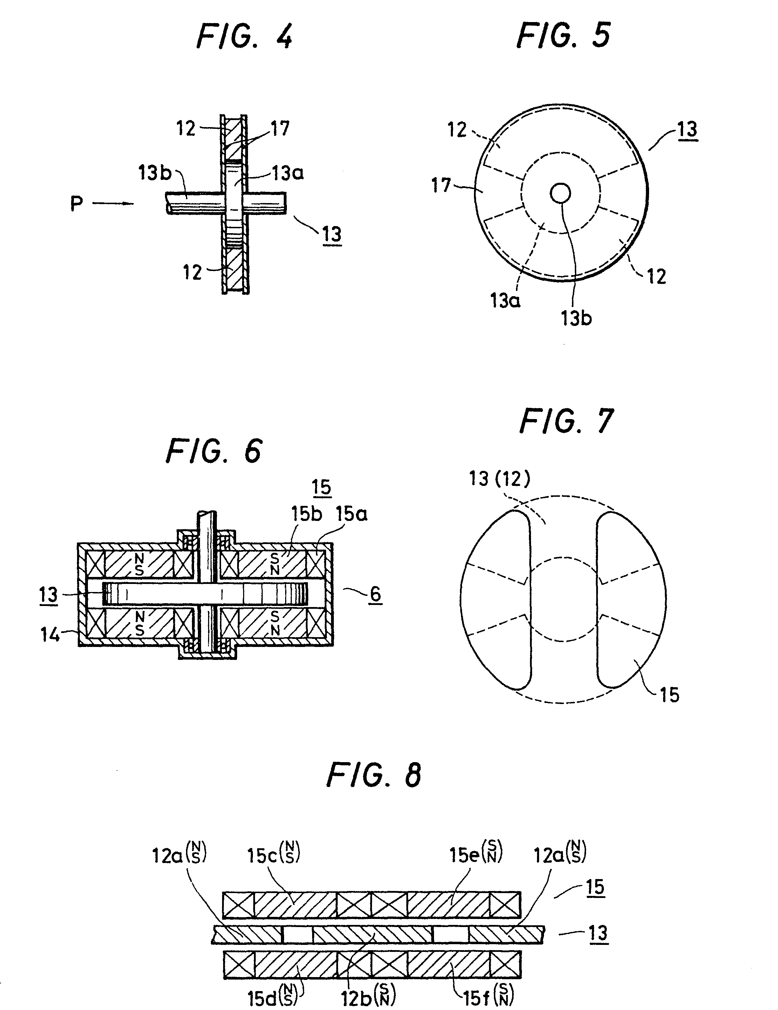

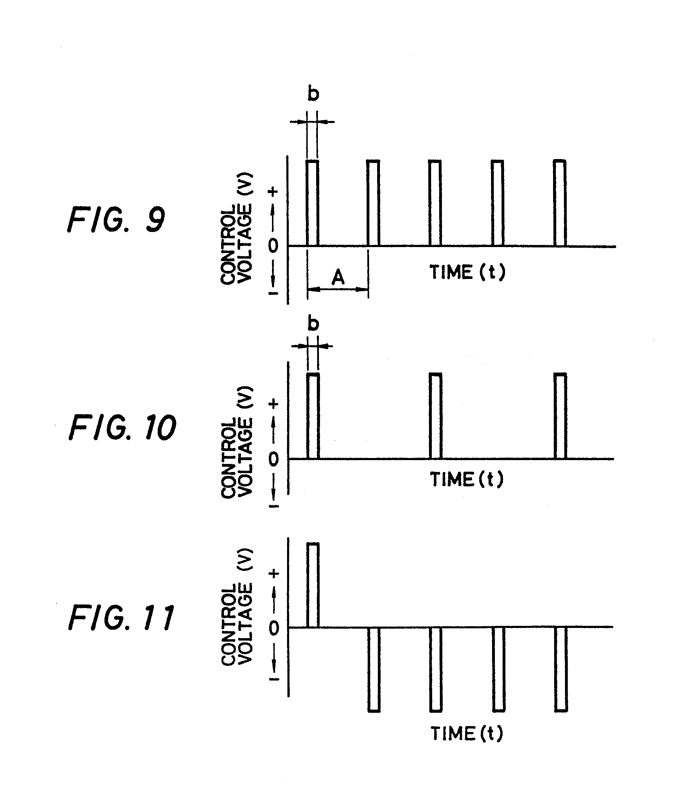

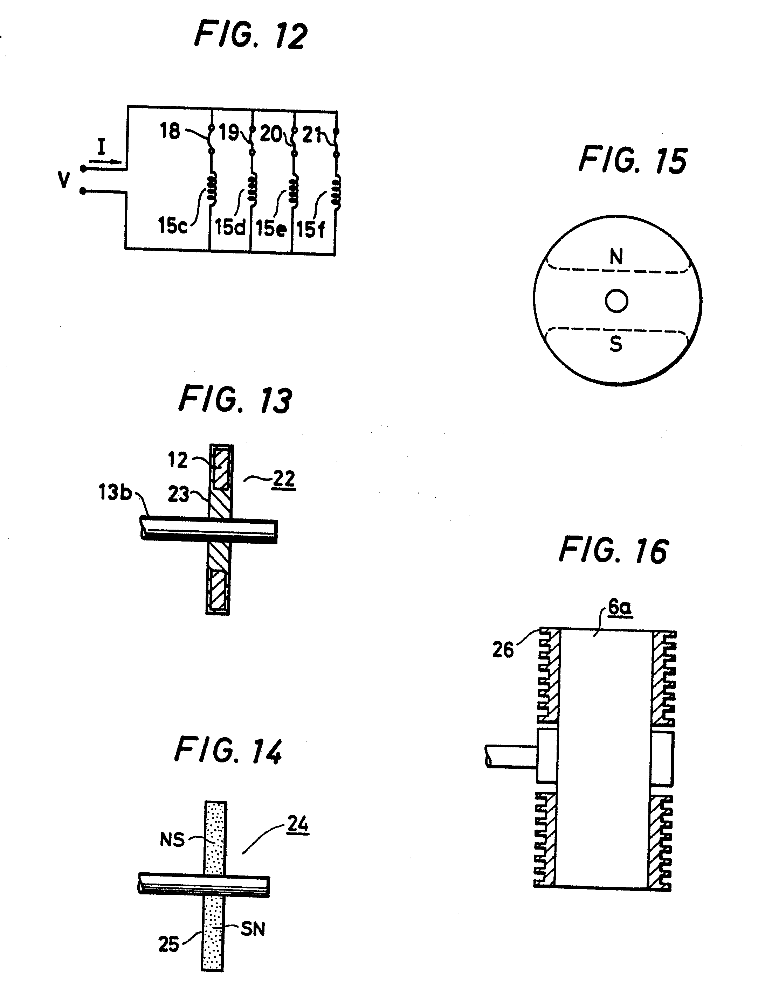

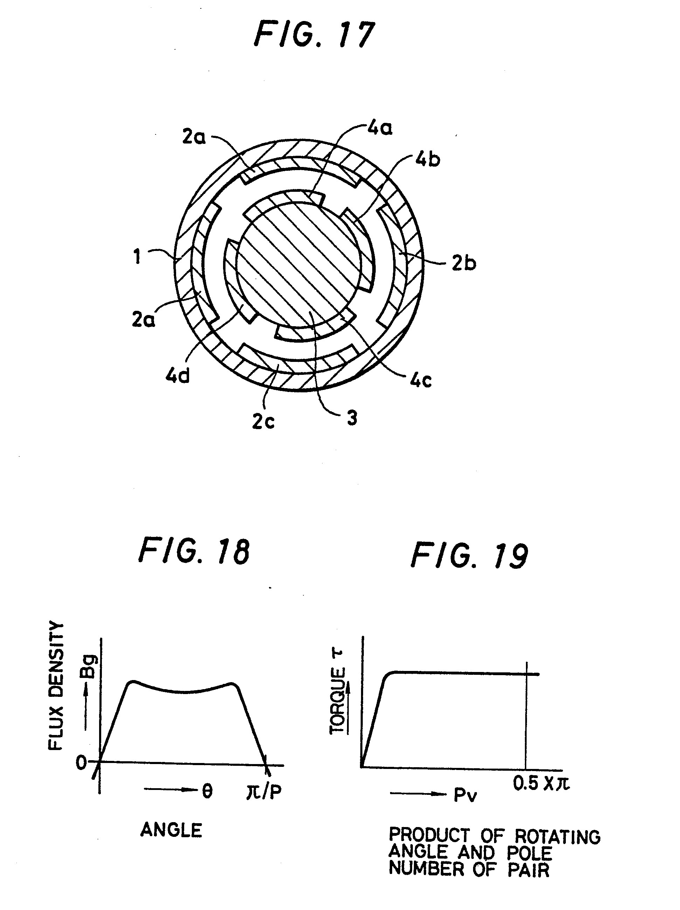

Figure 1 is a longitudinal side view of one embodiment of a torque motor of the present invention;
Figure 2 shows a section taken along a line I - I of

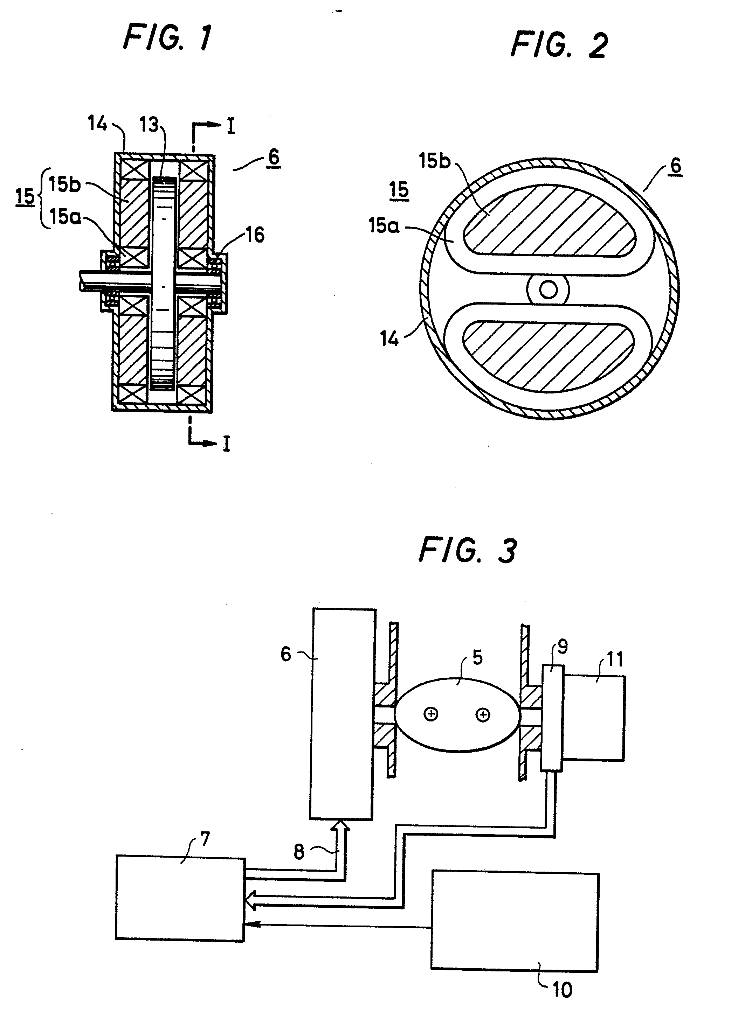

Fig. 1; Figure 3 shows a throttle valve controlling
system of the same embodiment; Figure 4 is a longitudinal side view of a rotor of the same embodiment;
Figure 5 is a view seen along an arrow P of Fig. 4;
Figure 6 is a polarity diagram showing the polarities
of fixed electromagnets of the same embodiment; Figure
7 is a plan view showing the positional relationship
between the permanent magnets and fixed electromagnets
of the rotor of the same embodiment; Figure 8 is an
illustration of the operation of a torque motor of
the same embodiment; Figures 9 to 11 are characteristic
diagrams showing the relationship between the time
and control voltage of the same embodiment, which are
different from one another; Figure 12 is a connection diagram showing the connection of hte fixed
electromagnets of the same embodiment; Figure 13 is
a longitudinal side view of a rotor of another embodiment of the torque motor of the present invention;
Figure 14 is a longitudinal side view of a rotor of
still another embodiment of the torque motor of the
present invention; Figure 15 shows a magnetic field of the rotor of Fig. 14; Figure 16 is a side view
of yet another embodiment of the torque motor of the
present invention; Figure 17 is a longitudinal side
view showing the construction of a magnetic coupling;
Figure 18 is a graph of magnetic flux density distribution of one pole of the magnetic coupling; and Figure
19 is a torque characteristic diagram of the magnetic
coupling.

Detailed Description of the Invention

Prior to the description of embodiments of the
invention, first an idea of the present invention
will be described.

In order to settle the problems as described
above, the inventors have discussed how a torque motor
of large torque can be obtained.  This discussion
has made it clear that an apparatus utilizing the
attractive and repulsive forces of magnetism capable
of generating a large torque is effective for the
aforesaid purpose.  As is shown in Figure 17, a magnetic
coupling, which is to be mentioned in this connection,
comprises an outer core 1, permanent magnets 2a to
2d fixed to this outer core 1, an inner core 3 disposed
inside the outer core 1 opposite thereto and with a
prescribed gap therefrom, and permanent magnets 4a to
4d fixed to said inner core 3 and arranged opposite to said permanent magnets 2a to 2d with a prescribed
gap therefrom.

The gap magnetic flux density of each of the
permanent magnets (2a ... 2d, 4a ... 4d) of the magnetic coupling thus constructed is distributed virtually
in the form of a trapezoid as illustrated in Figure
18 which shows a variation in magnetic flux density
$B_g$ in a gap according to an angle θ of each permanent
magnet to the center of the magnetic coupling, with
the magnetic flux density $B_g$ expressed on the ordinate
and the angle θ on the abscissa.  In this figure, P
denotes a number whose unit is a pair of poles, and
since P is 2 in this case, π/P = 90°.  In other words,
Fig. 18 shows the characteristic of the magnetic flux
density distribution of one of the permanent magnets
(2a ~ 2d, 4a ~ 4d) in the range of the angle of 90°.
The characteristic of the torque shown in Figure 19
is obtained from said magnetic flux density distribution.
Figure 19 shows the characteristic of the variation
of the torque according to the pole number of pair
x rotational angle (angle of displacement of the inner
core 3 to the outer core 1), with the torque τ expressed
on the ordinate and the pole number of pair P x rota-
tional angle θ on the abscissa.  As is seen from this
figure, a torque which is flat in a wide range and large can be obtained by this magnetic coupling.

Taking it into consideration that a large torque is generated in the magnetic coupling as stated above, the permanent magnets 2a ~2d of the outer core 1 are used as fixed electromagnets, and the positional relationship between the outer core 1 and the inner core 3 is shifted from the radial direction to the axial. In addition, a design is made for impressing the large torque on the fixed electromagnets only for a very short time, considering that the large torque is necessitated for a moment in which the throttle valve is switched from the closed state to the opened. Concretely, in a torque motor composed of a rotor having permanent magnets and of fixed electromagnets, the rotor is shaped in a disk, according to the present invention, and the permanent magnets are arranged in this disk so that magnetic fields in the axial direction are thereby generated. Moreover, the fixed electromagnets are constructed so that the magnetic fields thereof are also formed in the axial direction, and a prescribed control voltage is impressed on these fixed electromagnets. Such a construction enables the formation of a torque motor of high torque which enables the excellent control of a throttle valve which had been sluggish in its response.

The present invention will be described hereunder with reference to embodiments shown in drawings. One embodiment of the present invention is shown in Figures 1 to 12. As is shown in Figure 3, a control system for a throttle valve 5 is constructed in such a manner that a torque motor 6 is fitted to the throttle valve 5, and this motor is connected to a motor controller 7 by a control signal transmission cable 8. Moreover, a position detector 9 is fitted to the throttle valve 5 so that the position of the throttle valve 5 can be transmitted to the controller 7. The controller 7 controls the torque motor 6, determining a signal from the position detector 9, so that the throttle valve 5 can be found in an operational position in conformity with an instruction from a computer 10. A safety device 11 is provided to counter a situation in which the torque motor 6 can receive no signal due to any trouble in the controller 7 or the control signal transmission cable 8, or the like. In the control system for the throttle valve 5, which is constructed as described above, the torque motor 6 is provided with a rotor 13 having permanent magnets 12, a fixed case 14 supporting this rotor 13, fixed electromagnets 15 supported by this fixed case 14 and arranged opposite to the permanent magnets 12 of the rotor 13 with a prescribed gap therefrom, etc. Furthermore,
said rotor 13 is shaped in a disk, the permanent magnets 12 being arranged in the disk 13a so that magnetic
fields in the axial direction are thereby generated,
the fixed electromagnets 15 being constructed so that
the magnetic fields thereof are also formed in the
axial direction, and a prescribed control voltage V
being impressed on said fixed electromagnets 15 (see
Figures 1 and 2 and Figures 4 to 12). According to
the above-described construction, the rotor 13 is
shaped in the disk, while the permanent magnets 12
are arranged in this disk 13a so that magnetic fields
are generated thereby in the axial direction. Moreover,
the fixed electromagnets 15 are constructed so that
the magnetic fields thereof are also formed in the
axial direction, while the prescribed control voltage
V is impressed on these fixed electromagnets 15.
Thus, the torque motor 6 of high torque which enables
the excellent control of a throttle valve had been
responding sluggishly to move due to a change with
time etc. can be obtained.

In detail, four fixed electromagnets 15 in two
pairs are arranged and fixed inside the fixed case
14 so that two of them face eath other in the axial
direction. Each of these fixed electromagnets 15 are formed by winding wire 15a on cores 15b, while the - rotor 13 is provided between these cores 15b facing each other in a pair and is supported by bearings 16 (cf. Fig. 1). Each of the cores 15b of the fixed electromagnets 15 is shaped in a semicircle, and the wire 15a is wound on the outer periphery thereof (cf. Fig. 2).

The rotor 13 is formed of the disk 13a and a shaft 13b, while the permanent magnets 12 are provided in the end portions of the disk 13a, and the permanent magnets 12 and the disk 13a are held between disk-shaped side plates 17 (cf. Figs. 4 and 5).

The fixed electromagnets 15 and the rotor 13 are arranged so that the fixed electromagnets 15 are shifted in the circumferential direction through an electrical angle of 90° from the permanent magnets 12 of the rotor 13 (cf. Figs. 6 and 7). On the fixed electromagnets 15 a prescribed control voltage V is impressed in such a manner as shown in Figs. 9 to 11. Each of these figures shows the relationship between a time and the control voltage V, expressing the control voltage V on the ordinate and the time $t$ on the abscissa, and showing that a rectangular-wave voltage, which is the control voltage V having a time width $b$, is impressed in a cycle A (cf. Fig. 9). While the amplitude of the control voltage V and the time width b are
set invariable, the cycle A is made variable so that
it can be larger than that of Fig. 9 (cf. Fig. 10).
Torque generated by the torque motor can be controlled
by adjusting this cycle A. Moreover, the control
voltage V is made variable in a minus region as well
as in a plus region (cf. Fig. 11). Although the time
width b of the control voltage V is set invariable
in this case like that in Fig. 9, the direction of
the torque generated by the torque motor is made controllable by this constitution.

When the permanent magnets 12a and 12b of the
rotor 13 and the fixed electromagnets 15c, 15d, 15e
and 15f are positioned respectively as shown in Fig.
8, according to the above-described construction, the
electrification of each of fixed electromagnets 15c,
15d, 15e and 15f elicits polarity of N and S as shown
in the figure. Under the condition, the fixed electromagnets 15c and 15d and the permanent magnet 12a of
the rotor 13 attract each other, while the fixed electromagnets 15e and 15f and the permanent magnet 12b of
the rotor 13 also attract each other. Conversely,
the fixed electromagnets 15c and 15d and the permanent
magnet 12b of the rotor 13 repel each other, while
the fixed electrodes 15e and 15d and the permanent magnet 12a of the rotor 13 also repel each other.
Based on this force relationship, the rotor 13 generates
a force in the right direction of the figure, and
this force is a torque when viewed in a circle as
shown in Fig. 7. When the electrification of each
of the fixed electromagnets 15c, 15d, 15e and 15f is
reversed in the above-stated operation, the polarity
of N and S of each of the fixed electromagnets 15c,
15d, 15e and 15f is also reversed to that of Fig. 8;
consequently, the rotor 13 turns to generate a force
in the left direction of this figure. Thus, normal
and reverse torques are generated by controlling the
direction of electrification in this way. Since two
magnetic fields are formed in the angular range of
360°C in the present embodiment, a rotation control
can be effected in the range of 180°C, and in the
range of 90°, in particular, a high torque can be
generated, which enables the smooth control of the
throttle valve rotating only in the range of 90°.
Figure 12 illustrates the connection of the fixed
electromagnets. As is shown in this figure, the fixed
electromagnets 15c, 15d, 15e and 15f are connected in
parallel, and fuses 18, 19, 20 and 21 are fitted to
the fixed electromagnets 15c, 15d, 15e and 15f respectively so that the control voltage V is impressed therethrough. Even when any one of these fixed electromagnets 15c, 15d, 15e and 15f, the fixed electromagnet
15c, for instance, is disconnected, the aforesaid
parallel connection of the fixed electromagnets en-
sures the electrification of the other three electromagnets, thus enabling the operation thereof. Moreover, the provision of the fuses 18, 19, 20 and 21
enables the protection of the controller etc., since,
even if the short circuit of the fixed electromagnet
15c, for instance, allows an overcurrent to flow, the
fuse 18 connected to this fixed electromagnet 15c
is blown, and thereby the overcurrent stops flowing
in the next moment. The similar effect can be obtained
by using breakers in place of the fuses 18 to 21.

Since the fixed electromagnets 15 are disposed
on both sides of the rotor 13, shifted by the angle
of 90° from the permanent magnets 12, according to
the present embodiment, as described above, a large
torque is generated even by a small-sized torque motor.
Accordingly, even the throttle valve 5 having been
reluctant to move due to a change with time etc. can
be controlled excellently.

Figure 13 shows another embodiment of the present
invention. In this embodiment, a disk-shaped rotor
22 is formed of a molding material 23, and the permanent magnets 12 is embedded in this molding material 23.

Plastic is used as the molding material 23.  Since plastic is a non-magnetic material, it is free from the short circuit of a magnetic circuit.  Accordingly, this constitution enables more effective utilization of the magnetic force of the permanent magnets than the previously-described constitution.

Figures 14 and 15 show still another embodiment of the present invention.  In this embodiment, a disk-shaped rotor 24 is formed of a powder molding material 25 with the powder of a permanent magnet mixed therein.

Magnetic fields formed by an operation of magnetization in this case are as shown in Fig. 15.  The use of the powder molding material 25 with the powder of a permanent magnet mixed therein makes it unnecessary to machine the permanent magnet, differently from the case of the previously-described permanent magnet 12 of Fig.

13, and in addition, can eliminate the possibility of the cracking, distortion etc. of the magnet due to thermal expansion or thermal shrinkage, since the rotor 24 is formed of a uniform material.

Figure 16 shows yet another embodiment of the torque motor.  As is shown in this figure, a torque motor 6a is fitted with radiator fins 26 in employment.

The torque motor 6a is employed in an engine room, and therefore the temperature around the torque motor 6a is sometimes as high as about 130 degrees. Accordingly, the fitting of these radiator fins 26 facilitates the heat radiation, and thus enables the prolongation of the lifetime of the torque motor 6a compared with those described previously.

As is described above, the present invention enables the excellent control even of a throttle valve having been reluctant to move, thus enabling the attainment of a torque motor of high torque which enables the excellent control of the throttle valve even when it has been reluctant to move due to a change with time etc.

WHAT IS CLAIMED IS:

1.    A torque motor (6; 6a) provided with a rotor (13; 22; 24) having permanent magnets (12), a fixed case (14) supporting this rotor (13; 22; 24) and fixed electromagnets (15) supported by this fixed case (14) and arranged opposite to the permanent magnet (12) of said rotor (13; 22; 24) with a prescribed gap from these magnets (12), characterized in that said rotor (13; 22; 24) is shaped in a disk, said permanent magnets (12) are arranged in this disk (13a) so that they generate magnetic fields in the axial direction, said fixed electromagnets (15) are constructed so that they also form magnetic fields in the axial direction, and a prescribed control voltage is impressed on these fixed electromagnets (15).

2.    A torque motor according to  Claim 1, in which said fixed electromagnets (15) are provided on both sides in the axial direction of said disk-shaped rotor (13; 22; 24).

3.    A torque motor according to Claim 1, in which said fixed electromagnets (15) are arranged so that they are shifted in the circumferential direction through an electrical angle of 90 degrees from the permanent magnets (12) of the aforesaid rotor (13).

4.    A torque motor according to Claim 1, in which the aforesaid prescribed control voltage is a rectangular-wave voltage whose frequency is variable.

5.    A torque motor according to Claim 1, of which the aforesaid disk-shaped rotor (24) is made of a powder molding material (25) in which the powder of a permanent magnet is mixed.

6.    A torque motor according to Claim 1, of which said disk-shaped rotor (22) is formed of a molding material, while the aforesaid permanent magnets (12) are embedded inside said molding material (23).

7.    A torque motor according to Claim 6, in which said molding material (23) is plastic.

FIG. 1

FIG. 2

FIG. 3

0175903

## FIG. 4

## FIG. 5

## FIG. 6

## FIG. 7

## FIG. 8

*FIG. 9*

*FIG. 10*

*FIG. 11*

0175903

# FIG. 12

# FIG. 15

# FIG. 13

# FIG. 16

# FIG. 14

0175903

# FIG. 17

# FIG. 18

FLUX DENSITY → Bg

0

→ θ    π/P

ANGLE

# FIG. 19

TORQUE τ

0.5 × π

→ Pv

PRODUCT OF ROTATING
ANGLE AND POLE
NUMBER OF PAIR

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 408 939 (ASEA A.B.) * page 1, line 1 - page 2, line 20; figures 1, 2 * | 1,2 | H 02 K 26/00 H 02 K 21/24 |
| Y | | 3 | |
| | --- | | |
| X | DE-A-3 146 703 (TELDIX) * abstract; page 5, lines 1-26; figure 1 * | 1,2 | |
| Y | | 3 | |
| | --- | | |
| Y | GB-A-2 067 025 (PORTESCAP) * page 1, line 67 - page 2, line 10; figures 1, 2 * | 3 | |
| | --- | | TECHNICAL FIELDS SEARCHED (Int. Cl.4) |
| X | DE-A-2 802 753 (M. WEH) * page 6, line 18 - page 9, line 17; figures 1, 2 * | 1,2 | H 02 K 26/00 H 01 F 7/00 H 02 K 21/00 |
| A | | 4 | H 02 K 37/00 |
| | --- | | |
| A | PATENT ABSTRACTS OF JAPAN, vol. 7, no. 272 (E-214)[1417], 3rd December 1983; & JP - A - 58 151 856 (SUNA SEIKOSHA K.K.) 09-09-1983 | 5,6 | |
| | --- -/- | | |

The present search report has been drawn up for all claims

| Place of search | Date of completion of the search | Examiner |
|---|---|---|
| BERLIN | 18-11-1985 | WEIHS J.A. |

European Patent Office

## DOCUMENTS CONSIDERED TO BE RELEVANT -

| Category | Citation of document with indication, where appropriate, of relevant passages | Relevant to claim | CLASSIFICATION OF THE APPLICATION (Int. Cl.4) |
|---|---|---|---|
| A | GB-A-2 007 146 (BSR LTD.)<br>* page 1, line 103 - page 2, line 4; figure 1 * | 7 | |

-----

TECHNICAL FIELDS
SEARCHED (Int. Cl.4)

The present search report has been drawn up for all claims

| Place of search | Date of completion of the search | Examiner |
|---|---|---|
| BERLIN | 18-11-1985 | WEIHS J.A. |